# EUROPÄISCHE PATENTSCHRIFT

(11) **EP 2 332 718 B1**
(45) Veröffentlichungstag und Bekanntmachung des Hinweises auf die Patenterteilung: **23.01.2019**
(21) Anmeldenummer: 10193447.9
(22) Anmeldetag: 02.12.2010
(51) Int. Cl.: B29C 63/00, B27D 5/00, B27G 11/00

(54) **5-Achsbearbeitungszentrum mit Anleimaggregat**
5-axis processing centre with gluing body
Centre de traitement à 5 axes doté d'un agrégat de collage

(30) Priorität: 04.12.2009 DE 202009016509 U
(43) Veröffentlichungstag der Anmeldung: 15.06.2011
(73) Patentinhaber: HOMAG GmbH, 72296 Schopfloch (DE)
(72) Erfinder: Amos, Hartmut, 72108 Rottenburg (DE)
(74) Vertreter: Hoffmann Eitle

(56) Entgegenhaltungen:
- EP-A1- 0 743 139
- EP-A1- 1 714 756
- EP-A1- 1 777 048
- DE-A1- 3 914 461

## Beschreibung

### Technisches Gebiet

Die vorliegende Erfindung betrifft ein Bearbeitungszentrum mit einem Anleimaggregat zum Bearbeiten von plattenförmigen Werkstücken, insbesondere aus Holz bzw. Holzwerkstoffen.

### Stand der Technik

Bearbeitungszentren zum Bearbeiten von plattenförmigen Werkstücken, insbesondere aus Holz bzw. Holzwerkstoffen weisen häufig ein Anleimaggregat zum Anleimen eines Kantenmaterials an eine Schmalfläche des Werkstücks auf. Dadurch kann eine spanende Bearbeitung, z.B. einer Kante des Werkstücks mit einem Anleimen des Kantenmaterials kombiniert werden, so dass eine neue Aufspannung des Werkstücks in einer separaten Kantenanleimmaschine nicht erforderlich ist. Für die Anleimaggregate kommen verschiedene Techniken zum Einsatz, z.B. wird Leim mittels Walzen auf eine Werksstückschmalfläche aufgetragen und anschließend Kantenmaterial auf die Werkstückschmalfläche aufgelegt und dann beispielsweise unter Einsatz von Andrückrollen an die Werkstückschmalfläche angedrückt. Eine folgende Aushärtung des Leims ermöglicht einen festen Sitz des Kantenmaterials. Über die Werkstückschmalfläche überstehendes Material wird dann oft in einem weiteren Arbeitsschritt abgetrennt. Andere Anleimaggregate arbeiten mit einem Laser zum Bestrahlen und Erweichen einer Beschichtung des Kantenmaterials, um eine Feste Verbindung zwischen Kantenmaterial und Werkstückschmalfläche zu erzielen.

Bearbeitungszentren mit Anleimaggregat sind beispielsweise aus der DE 10 2005 018 885 B3 und der EP 0728 561 A1 bekannt.

Bei den bekannten Anleimaggregaten werden Werkstückschmalflächen, die nicht senkrecht zu der ebenen Erstreckung des Werkstücks verlaufen, entweder mittels geneigt angeordneter Rollen oder bei umlaufenden Kanten beispielsweise mittels konischer Rollen zum Andrücken des Kantenmaterials abgefahren. Diese Anleimaggregate sind im Hinblick auf die Werkstückgeometrie festgelegt und bedingen einen hohen Umrüstaufwand bei einem Produktwechsel und geänderter Kantengeometrie.

Ferner kommen Anleimaggregate mit gesteuerten Schwenkachsen zum Einsatz, die eine Neigung entsprechend dem Neigungswinkel der Werkstückschmalfläche zu der ebenen Erstreckung des Werkstücks ermöglichen. Solche Anleimaggregate erfordern eine aufwändige steuerungstechnische Anbindung und elektrische Schnittstellen.

Ferner offenbart die EP 1 777 048 A1 ein Bearbeitungszentrum zum Bearbeiten plattenförmiger Werkstücke mit einem Anleimaggregat zum Anleimen eines Kantenmaterials an eine Schmalfläche des plattenförmigen Werkstücks sowie mit einem 5-Achs-Kopf.

### Darstellung der Erfindung

Der Erfindung liegt die Aufgabe zu Grunde, ein Bearbeitungszentrum mit Anleimaggregat zu schaffen, das sich auch für die Bearbeitung von zu einer ebenen Erstreckung des Werkstücks geneigten und umlaufenden Werkstückschmalflächen eignet und steuerungstechnisch einfach integrierbar ist, insbesondere indem es ohne elektrische Schnittstelle zwischen Bearbeitungszentrum und Anleimaggregat auskommt.

Diese Aufgabe wird durch die im Anspruch 1 beschriebenen Merkmale gelöst. Weiter vorteilhafte Ausführungsbeispiele sind in den Unteransprüchen beschrieben.

Ein erfindungsgemäßes Bearbeitungszentrum zum Bearbeiten plattenförmiger Werkstücke, die bevorzugt zumindest abschnittsweise aus Holz, Holzwerkstoffen, Kunststoff oder dergleichen bestehen, ist als 5-Achsbearbeitungszentrum ausgebildet. Ein solches 5-Achsbearbeitungszentrum weist einen 5-Achskopf auf, der am Bearbeitungszentrum entlang von drei in der Regel orthogonal zu einander angeordneten translatorischen Achsen verfahrbar ist und der zusätzlich zwei rotatorische Achsen aufweist. Das Anleimaggregat kann von diesem 5-Achskopf analog einem Werkzeug aufgenommen werden. Die 5-Achskinemtik ermöglicht es, das Anleimaggregat über die drei translatorischen Achsen im Raum zu positionieren und mittels der zwei translatorischen Achsen in eine wählbare Neigung zur ebenen Erstreckung des Werkstücks zu positionieren. Dadurch kann das Anleimaggregat auch entlang von nicht linear verlaufenden und zur ebenen Erstreckung des Werkstücks geneigten Werkszeugschmalflächen geführt werden, um dort Kantenmaterial anzuleimen. Durch die Nutzung der 5-Achskinematik muss im Anleimaggregat hierfür keine weitere zu steuernde Schwenkachse vorgesehen werden, wodurch eine steuerungstechnische oder elektrische Schnittstelle des Anleimaggregats entfallen kann. Dadurch wird das Anleimaggregat besonders einfach einwechselbar. Das Anleimaggregat kann wie ein normales Werkzeug automatisiert eingewechselt werden, ohne dass elektrische Anschlüsse verbunden werden müssen. Lediglich eine pneumatische Schnittstelle, wie sie bereits standardisiert verfügbar ist, kann vorgesehen werden, um eine Energieversorgung zum Anleimaggregat zur Verfügung zu stellen.

Gemäß einer bevorzugten Ausführungsform wird ein kardanischer 5-Achskopf vorgesehen. Kardanische 5-Achsköpfe bieten den Vorteil, dass sie wenig Bauraum erfordern und mehr Bewegungsfreiraum bieten.

Gemäß einer weiteren bevorzugten Ausführungsform wird ein kartesischer 5-Achskopf vorgesehen. Ein Vorteil des kartesischen 5-Achskopfes liegt in seiner einfachen Programmierbarkeit auf Grund der kartesischen Aufhängung. Da sich bei einem karthesischen 5-Achskopf bei einer Verdrehung der ersten Drehachse (A-Achse) die Ausrichtung des Anleimaggregates zum orthogonalen Achssystem (X-, Y-, Z-Achse) der Maschine nicht verändert, wenn die A-Achse parallel zur Anleimrichtung verläuft, kann das Anleimaggregat in einer gleich bleibenden Winkelanstellung zur Werkstückschmalfläche nachgeführt werden.

Bevorzugt ist das Anleimaggregat mit einem thermisch isolierten Leimbehälter zum Speichern des Leims ausgestattet. Dadurch kann heiß zu verarbeitender Leim lange auf einer gewünschten Bearbeitungstemperatur gehalten werden. Bevorzugt kann das Anleimaggregat ferner ein Heizaggregat aufweisen, um den Leim zum Aufbringen auf das Kantenmaterial und/oder die Schmalfläche aufzuheizen. Das Heizaggregat benötigt für das Aufwärmen des Leims Energie. Diese Energie kann auf unterschiedliche Arten zur Verfügung gestellt werden. Beispielsweise kann Druckluft vom Heizaggregat mittels einer kleinen Turbine und eines Generators in elektrische Energie umgewandelt werden, mittels der das Heizaggregat betrieben wird. Ebenso kann der Generator durch die Spindel des 5-Achskopfes oder eine Masse angetrieben werden, die sich beim Beschleunigen des 5-Achskopfes verlagert und deren Bewegung mittels einer geeigneten Mechanik zum Generator übertragen wird. Eine weitere Möglichkeit besteht in einer berührungslosen Energieübertragung zum Heizaggregat mittels Lichtstrahlen, z.B. in Form eines Laserstrahls. Ferner ist es im Sinn der vorliegenden Erfindung, dass das Heizaggregat Wärme durch eine chemische Reaktion einer oder mehrerer Substanzen erzeugt. Beispielsweise kann eine konventionelle Gaskartusche mit Gas als Energiequelle des Heizaggregates dienen. Dadurch kann ohne eine elektrische Schnittstelle eine Erwärmung des Leims auf die gewünschte Arbeitstemperatur erfolgen.

Gemäß einer bevorzugten Ausführungsform ist eine Zuführeinheit für das Kantenmaterial durch einen Eingriff des Anleimaggregates mit dem Werkstück und die Relativbewegung zwischen Werkstück und Anleimaggregat antreibbar. Dazu kommt bevorzugt eine Reibrolle zum Einsatz, die auf dem Werkstück abrollt. Auch bei fehlender elektrischer Schnittstelle und entsprechender elektrischer Motoren im Anleimaggregat kann auf diese Weise eine aktive Zuführung von Kantenmaterial erzielt werden. Die Energie hierzu wird mechanisch aus der Relativbewegung zwischen Werkstück und Anleimaggregat über eine auf dem Werkstück abrollende Rolle und eine geeignete mechanische Umsetzung gewonnen.

Mittels der vorliegenden Erfindung ist es möglich, verschiedene Arten von Oberfräsen mit Kantenanleimaggregaten in einfacher Weise auszustatten und so zu Bearbeitungszentren auszubauen. Ein weiterer Vorteil besteht in der Möglichkeit, mit dem erfindungsgemäßen Bearbeitungszentrum Werkstückschmalflächen mit Kantenmaterial zu versehen, die nicht senkrecht zur ebenen Erstreckung des Werkstücks angeordnet sind.

### Kurze Beschreibung der Zeichnungen

Von den Figuren zeigen:
- Fig. 1: eine perspektivische Darstellung eines Ausschnitts eines 5-Achsbearbeitungszentrums mit einem Anleimaggregat an einem kardanischen 5-Achskopf;
- Fig. 2: eine perspektivische Darstellung eines Ausschnitts eines 5-Achsbearbeitungszentrums mit einem Anleimaggregat an einem kartesischen 5-Achskopf;
- Fig. 3: zwei perspektivische Darstellungen eines Anleimaggregates an einem kartesischen 5-Achskopf eines 5-Achsbearbeitungszentrums gemäß dem Ausführungsbeispiel aus Fig. 2.

### Ausführliche Beschreibung bevorzugter Ausführungsformen

Die Erfindung wird im Folgenden anhand von Ausführungsbeispielen unter Bezugnahme auf die beiliegenden Figuren der Zeichnung näher erläutert. In den Figuren bezeichnen dieselben Bezugszeichen gleiche oder funktionsgleiche Komponenten, soweit nichts Gegenteiliges angegeben ist.

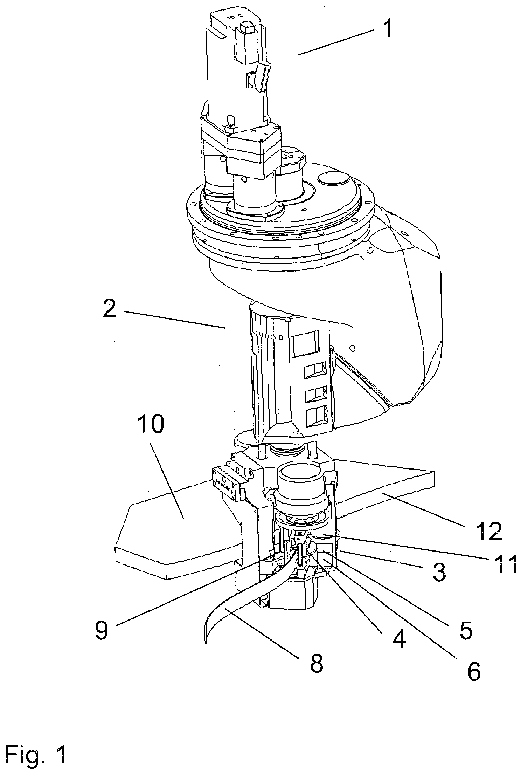

Fig. 1 zeigt eine perspektivische Darstellung eines Ausschnitts eines 5-Achsbearbeitungszentrums 1 mit einem Anleimaggregat 3 an einem kardanischen 5-Achskopf 2. Der 5-Achskopf 2 ermöglicht das Schwenken des Anleimaggregates um zwei rotatorische Achsen. Ferner ist er in drei translatorischen Richtungen im Raum bewegbar. Die translatorischen Achsen sind nicht dargestellt. Das Anleimaggregat 3 weist eine Zuführeinheit 9 auf, mit dem Kantenmaterial 8, hier in Bandform, auf eine Schmalfläche 12 eines Werkstücks 10 aufgebracht wird. Das Anleimaggregat 3 weist ferner einen Leimbehälter 6 mit Leim 5 auf, der auf die Schmalfläche 12 des Werkstücks 10 vor dem Aufbringen des Kantenmaterials 8 aufgetragen wird, um das Kantenmaterial 8 an der Schmalfläche 12 des Werkstücks 10 anzubringen. Ein Heizaggregat 4 ist an dem Anleimaggregat 3 vorgesehen, um den Leim 5 auf seine Arbeitstemperatur aufzuheizen. Ebenso ist es möglich, Leim 5 über eine externe Zuführleitung (nicht dargestellt) dem Anleimaggregat zuzuführen. Eine Reibrolle 11 ist an dem Anleimaggregat vorgesehen, die bei einer Relativerlagerung von dem Anleimaggregat 3 zu dem Werkstück 10 auf dem Werkstück 10 abrollen kann und die Zuführeinheit 9 antreiben kann.

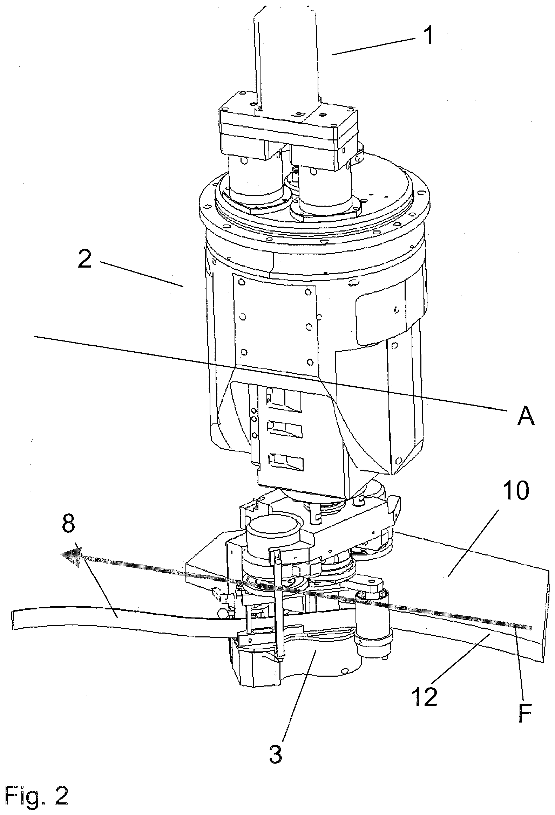

Fig. 2 zeigt eine perspektivische Darstellung eines Ausschnitts eines 5-Achsbearbeitungszentrums 1 mit einem Anleimaggregat 3 an einem kartesischen 5-Achskopf 2. Die Anordnung entspricht im Wesentlichen der aus Fig. 1, jedoch kommt hier ein kartesischer 5-Achskopf zum Einsatz. Die Schwenkachse A des kartesischen 5-Achskopfes 2 ist parallel zur Anleimrichtung F des Anleimaggregates 3 ausgerichtet. Dadurch ist es möglich, das Anleimaggregat 3 einem Konturverlauf der Werkstückschmalfläche 12 nachzuführen, auch wenn die A-Achse A aus der senkrechten Lage herausgeschwenkt wird. Es ist dadurch möglich Werkstückschmalflächen 12 zu bearbeiten, die nicht orthogonal zur ebenen Erstreckung des Werkstücks 10 angeordnet sind.

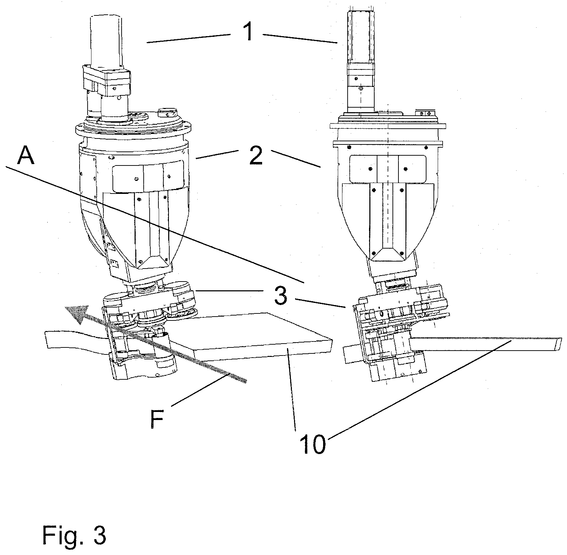

Fig. 3 zeigt zwei perspektivische Darstellungen eines Anleimaggregates 3 an einem kartesischen 5-Achskopf 2 eines 5-Achsbearbeitungszentrums 1 gemäß dem Ausführungsbeispiel aus Fig. 2. Die linke und rechte Darstellung unterscheiden sich lediglich durch ihren Blickwinkel. Wie in Fig. 2 verlaufen Anleimrichtung F und die Richtung der A-Achse A parallel zueinander. In der linken Darstellung verlaufen die Achsen A und F von links oben nach rechts unten und in der rechten Darstellung vertikal in die Bildebene hinein. In der rechten Darstellung ist gut erkennbar, dass ein Schwenken um eine parallel zur Anleimrichtung F verlaufende A-Achse A eine Neigung des Anleimaggregates 3 zum Werkstück 10 zur Folge hat.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: 5-Achsbearbeitungszentrum
- 2: 5-Achskopf
- 3: Anleimaggregat
- 4: Heizaggregat
- 5: Leim
- 6: Leimbehälter
- 8: Kantenmaterial
- 9: Zuführeinheit
- 10: Werkstück
- 11: Reibrolle
- 12: Schmalfläche
- A: A-Achse
- F: Anleimrichtung

## Patentansprüche

1. Bearbeitungszentrum (1) zum Bearbeiten plattenförmiger Werkstücke (10), die bevorzugt zumindest abschnittsweise aus Holz, Holzwerkstoffen, Kunststoff oder dergleichen bestehen mit einem einwechselbaren und an einem 5-Achskopf (2) anbringbaren Anleimaggregat (3) zum Anleimen eines Kantenmaterials (8) an eine Schmalfläche (12) des plattenförmigen Werkstücks (10).

2. Bearbeitungszentrum (1) nach Anspruch 1,
**dadurch gekennzeichnet,**
**dass** das Anleimaggregat (3) ohne elektrische Schnittstelle an das Bearbeitungszentrum (1) anbindbar ist.

3. Bearbeitungszentrum (1) nach Anspruch 1 oder 2,
**dadurch gekennzeichnet,**
**dass** das Bearbeitungszentrum (1) einen kardanischen 5-Achskopf (2) aufweist.

4. Bearbeitungszentrum (1) nach Anspruch 1 oder 2,
**dadurch gekennzeichnet,**
**dass** das Bearbeitungszentrum (1) einen kartesischen 5-Achskopf (2) aufweist.

5. Bearbeitungszentrum (1) nach einem der vorhergehenden Ansprüche,
**dadurch gekennzeichnet,**
**dass** das Kantenmaterial (8) als Band zugeführt wird.

6. Bearbeitungszentrum (1) nach einem der vorhergehenden Ansprüche,
**dadurch gekennzeichnet,**
**dass** das Anleimaggregat (3) ein Heizaggregat (4) aufweist, um Leim (5) zum Aufbringen auf das Kantenmaterial (8) und/oder die Schmalfläche (12) auf Betriebstemperatur zu bringen und zu halten.

7. Bearbeitungszentrum (1) nach einem der vorhergehenden Ansprüche,
**dadurch gekennzeichnet,**
**dass** das Anleimaggregat (3) einen thermisch isolierten Leimbehälter (6) zum Speichern des Leims (5) aufweist.

8. Bearbeitungszentrum (1) nach Anspruch 6 oder 7,
**dadurch gekennzeichnet,**
**dass** das Heizaggregat (4) elektrische Energie aus Druckluft mittels eines Generators gewinnt, Energie berührungslos beispielsweise mittels eines Laserstrahls zum Heizaggregat (4) übertragen wird oder das Heizaggregat Wärmeenergie aus einer chemischen Reaktion gewinnt.

9. Bearbeitungszentrum (1) nach einem der Ansprüche 6 bis 8,
**dadurch gekennzeichnet,**
**dass** das Heizaggregat (4) Energie aus einer Bewegung des 5-Achskopfes (2) oder der Drehung der Spindel gewinnt.

10. Bearbeitungszentrum (1) nach einem der vorhergehenden Ansprüche,
**dadurch gekennzeichnet,**
**dass** eine Zuführleitung vorgesehen ist, über die vorgewärmter Leim (5) dem Anleimaggregat (3) zuführbar ist.

11. Bearbeitungszentrum (1) nach einem der vorhergehenden Ansprüche,
**dadurch gekennzeichnet,**
**dass** eine Zuführeinheit (9) für das Kantenmaterial (8) durch einen Eingriff des Anleimaggregates (3) mit dem Werkstück (10) und die Relativbewegung zwischen Werkstück (10) und Anleimaggregat (3) antreibbar ist.

12. Bearbeitungszentrum (1) nach Anspruch 11,
**dadurch gekennzeichnet,**
**dass** die Zuführeinheit (9) eine Reibrolle (11) zum Abrollen auf dem Werkstück (10) und Antreiben der Zuführeinheit (9) aufweist.

13. Bearbeitungszentrum (1) nach Anspruch 10,
**dadurch gekennzeichnet,**
**dass** die Zuführeinheit (9) durch die Drehung der Spindel angetrieben wird.

## Claims

1. Processing centre (1) for processing panel-formed workpieces (10) which preferably consists at least in sections of wood, wood materials, plastic or the like, with an exchangeable gluing body (3) attachable to a 5-axis head (2) for gluing an edge material (8) to a narrow surface (12) of the panel-formed workpiece (10).

2. Processing centre (1) according to claim 1,
**characterised in that**
the gluing body (3) can be connected to the processing centre (1) without an electronic interface.

3. Processing centre (1) according to claim 1 or 2,
**characterised in that**
the processing centre (1) has a gimbal-mounted 5-axis head (2).

4. Processing centre (1) according to claim 1 or 2,
**characterised in that**
the processing centre (1) has a Cartesian 5-axis head (2) .

5. Processing centre (1) according to one of the preceding claims,
**characterised in that**
the edge material (8) is fed in the form of a band.

6. Processing centre (1) according to one of the preceding claims,
**characterised in that**
the gluing body (3) includes a heating assembly (4) in order to bring glue (5) to working temperature and keep it there for application to the edge material (8) and/or the narrow surface (12).

7. Processing centre (1) according to one of the preceding claims,
**characterised in that**
the gluing body (3) includes a thermally insulated glue container (6) for storing the glue (5).

8. Processing centre (1) according to claim 6 or 7,
**characterised in that**
the heating assembly (4) derives electrical energy from compressed air by means of a generator, energy is transferred to the heating assembly (4) in a contact-free manner, for example by means of a laser beam, or the heating assembly derives thermal energy from a chemical reaction.

9. Processing centre (1) according to one of the claims 6 to 8,
**characterised in that**
the heating assembly (4) derives energy from a movement of the 5-axis head (2) or the rotation of the spindle.

10. Processing centre (1) according to one of the preceding claims,
**characterised in that**
a feed line is provided via which the preheated glue (5) can be fed to the gluing body (3).

11. Processing centre (1) according to one of the preceding claims,
**characterised in that**
a feed unit (9) for the edge material (8) can be driven through an engagement of the gluing body (3) with the workpiece (10) and the relative movement between workpiece (10) and gluing body (3).

12. Processing centre (1) according to claim 11,
**characterised in that**
the feed unit (9) has a friction roller (11) designed to roll against the workpiece (10) and drive the feed unit (9) .

13. Processing centre (1) according to claim 10,
**characterised in that**
the feed unit (9) is driven by the rotation of the spindle.

## Revendications

1. Centre d'usinage (1) pour l'usinage de pièces à usiner (10) en forme de plaque qui se composent de préférence au moins par sections de bois, matériaux dérivés du bois, matière plastique ou similaires avec un agrégat de collage (3) interchangeable et pouvant être monté sur une tête à 5 axes (2) pour le collage d'un matériau d'arête (8) sur une surface étroite (12) de la pièce à usiner (10) en forme de plaque.

2. Centre d'usinage (1) selon la revendication 1,
**caractérisé en ce**
**que** l'agrégat de collage (3) peut être attaché sans interface électrique au centre d'usinage (1).

3. Centre d'usinage (1) selon la revendication 1 ou 2,
**caractérisé en ce**
**que** le centre d'usinage (1) présente une tête à 5 axes (2) à Cardan.

4. Centre d'usinage (1) selon la revendication 1 ou 2,
**caractérisé en ce**
**que** le centre d'usinage (1) présente une tête à 5 axes (2) cartésienne.

5. Centre d'usinage (1) selon l'une quelconque des revendications précédentes,
**caractérisé en ce**
**que** le matériau d'arête (8) est amené en tant que bande.

6. Centre d'usinage (1) selon l'une quelconque des revendications précédentes,
**caractérisé en ce**
**que** l'agrégat de collage (3) présente un agrégat de chauffage (4) afin de porter et de maintenir de la colle (5) pour l'application sur le matériau d'arête (8) et/ou la surface étroite (12) à la température de service.

7. Centre d'usinage (1) selon l'une quelconque des revendications précédentes,
**caractérisé en ce**
**que** l'agrégat de collage (3) présente un récipient de colle (6) thermo-isolé pour le stockage de la colle (5).

8. Centre d'usinage (1) selon la revendication 6 ou 7,
**caractérisé en ce**
**que** l'agrégat de chauffage (4) obtient de l'énergie électrique à partir d'air comprimé au moyen d'un générateur, de l'énergie est transmise sans contact par exemple au moyen d'un faisceau laser à l'agrégat de chauffage (4) ou l'agrégat de chauffage obtient de l'énergie thermique à partir d'une réaction chimique.

9. Centre d'usinage (1) selon l'une quelconque des revendications 6 à 8,
**caractérisé en ce**
**que** l'agrégat de chauffage (4) obtient de l'énergie à partir d'un déplacement de la tête à 5 axes (2) ou de la rotation de la broche.

10. Centre d'usinage (1) selon l'une quelconque des revendications précédentes,
**caractérisé en ce**
**qu'**une conduite d'amenée est prévue, par laquelle de la colle préchauffée (5) peut être amenée à l'agrégat de collage (3).

11. Centre d'usinage (1) selon l'une quelconque des revendications précédentes,
**caractérisé en ce**
**qu'**une unité d'amenée (9) pour le matériau d'arête (8) peut être entraînée par une mise en prise de l'agrégat de collage (3) avec la pièce à usiner (10) et le mouvement relatif entre la pièce à usiner (10) et l'agrégat de collage (3).

12. Centre d'usinage (1) selon la revendication 11,
**caractérisé en ce**
**que** l'unité d'amenée (9) présente un rouleau de friction (11) pour le déroulement sur la pièce à usiner (10) et l'entraînement de l'unité d'amenée (9).

13. Centre d'usinage (1) selon la revendication 10,
**caractérisé en ce**
**que** l'unité d'amenée (9) est entraînée par la rotation de la broche.
